# EUROPEAN PATENT APPLICATION

(11) **EP 0 848 226 A2**
(43) Date of publication of application: **17.06.1998**
(21) Application number: 97121680.9
(22) Date of filing: 09.12.1997
(51) Int. Cl.: F41A 33/02

(54) **Model gun for shooting game machine**

(30) Priority: 13.12.1996 JP 334079/96
(71) Applicant: Konami Co., Ltd., Kobe-shi, Hyogo-ken (JP)
(72) Inventor: Fujimoto, Hirofumi, Nishi-ku, Kobe-shi, Hyogo-ken (JP)
(74) Representative: Müller-Boré & Partner Patentanwälte

(57) **Abstract**

A model gun for use with a shooting game machine has an imaging device such as an area sensor for imaging spots of infrared radiation having a wavelength outside of the visible wavelength range which are emitted from light sources above a display monitor screen of the shooting game machine. The imaging device is mounted in a housing disposed in a gun casing and having an opening which is open in the direction in which the muzzle of the model gun faces, a bottom wall opposite to the opening, and a circumferential wall extending between the opening and the bottom wall. The housing is supported in a housing chamber defined in the gun casing by shock absorbing rings disposed around the circumferential wall, a shock absorbing ring disk disposed adjacent to the opening, and a shock absorbing ring disk disposed adjacent to the bottom wall.

## Description

The present invention relates to a model gun for use with a shooting game machine, which has an imaging device for imaging a predetermined area including a monitor display screen to detect a shot position on the monitor display screen, and more particularly to a model gun for use with a shooting game machine, which has an improved structure by which an imaging device is mounted in place. Description of the Prior Art:

Conventional shooting game machines have a model gun with a photosensor disposed on the muzzle thereof. When the player of such a shooting game machine pulls the trigger of the model gun, it sends a signal to display one frame of raster image, among frames of game image, on a monitor display screen such as a projector screen with a CRT for displaying game images. The position on the monitor display screen at which the muzzle is pointed, i.e., the position that is shot by the model gun, is detected when the displayed raster image is detected by the photosensor. At the same time, the shooting game machine determines whether a target is displayed in the shot position or not, i.e., whether the target is hit by the model gun or not.

If the model gun is a model machine gun which makes a succession of shots while the player is pulling the trigger, then the monitor display screen displays a raster image (white image) each time the model machine gun makes a shot to detect the shot position. However, since a number of successive white images are displayed in a short period of time, the white images tend to become visible to the eye, and the number of frames of game image is reduced, resulting a lower game image quality.

In view of the above shortcomings, there has been proposed a shooting game machine which generates a spot of infrared radiation at a position near a monitor display screen. The generated spot of infrared radiation is imaged by an area sensor mounted on a model gun and comprising an imaging device such as a charge-coupled device (CCD) or the like. The position on the monitor display screen that is shot by the model gun is ascertained from the position on the area sensor where the spot of infrared radiation is detected by the area sensor, for thereby determining whether a target displayed on the monitor display screen has been hit by the model gun or not. The shooting game machine does not suffer a poor game image quality because it is not necessary to switch from frames of game image to a frame of raster image (white image).

It is desirable that the model machine gun incorporate a mechanism capable of imparting successive impacts to the model machine gun itself to simulate the actual shooting of a real machine gun. However, successive impacts produced by such a mechanism are liable to cause an area sensor or imaging device on the model machine gun to gradually change its position and/or angle with time due to intensive vibrations, with the result that the imaging device may not be able to detect positions accurately. Furthermore, if the player inadvertently drops the model gun onto the floor, then the imaging device may possibly be damaged upon impact.

It is therefore an object of the present invention to provide a model gun for use with a shooting game machine, which prevents an area sensor on the model gun from changing in position and/or angle when a shot is fired by the model gun, and also prevents the area sensor from being damaged when the model gun is inadvertently dropped onto the floor.

According to an aspect of the present invention, there is provided a model gun for use with a shooting game machine having a monitor display screen, comprising a gun casing including a barrel having a muzzle on an end thereof, an area sensor disposed in the gun casing for imaging a predetermined area in a direction in which the muzzle is pointed at the monitor display screen to detect a shot position on the monitor display screen, a housing chamber defined in the gun casing and extending along the barrel, a housing disposed in the housing chamber, the area sensor being disposed in the housing, and a plurality of shock absorbing members interposed between the housing and the housing chamber.

The housing has an opening which is open in the direction, a bottom wall opposite to the opening, and a circumferential wall extending between the opening and the bottom wall, the shock absorbing members being disposed adjacent respectively to the circumferential wall, the opening, and the bottom wall.

The shock absorbing member disposed adjacent to the circumferential wall comprises a shock absorbing ring disposed around the circumferential wall, and the shock absorbing members disposed adjacent to the opening and the bottom wall comprise shock absorbing plates, respectively.

The model gun further comprises a light source disposed adjacent to the monitor display screen for emitting a spot of radiation to be imaged by the area sensor to detect the shot position on the monitor display screen. The area sensor has a photodetector surface inclined with respect to a plane of the muzzle for imaging the spot of radiation from the light source in a substantially central area of the photodetector surface when the muzzle is pointed at a substantially central area of the monitor screen.

At least one of the shock absorbing members is made of a gel. The shock absorbing ring disposed around the circumferential wall is made of a gel.

The shock absorbing plate disposed adjacent to the bottom wall is thicker than the shock absorbing plate disposed adjacent to the opening.

According to another aspect of the present invention, there is also provided a model gun for use with a shooting game machine having a monitor display screen, comprising a gun casing having a muzzle on an end thereof and a housing chamber defined therein, a housing disposed in the housing chamber, an area sensor disposed in the housing for imaging a spot of radiation emitted with respect to the monitor display screen to detect a position on the monitor display screen which is pointed at by the muzzle, and a plurality of elastomeric shock absorbing members interposed between the housing and the housing chamber.

The above and other objects, features, and advantages of the present invention will become more apparent from the following description when taken in conjunction with the accompanying drawings in which preferred embodiments of the present invention are shown by way of illustrative example.
FIG. 1 is a perspective view of a shooting game machine which incorporates a model gun according to the present invention;
FIG. 2 is a side elevational view, partly broken away, of the model gun according to the present invention;
FIG. 3 is an enlarged front elevational view of a housing which supports an imaging device in the model gun;
FIG. 4 is a cross-sectional view taken along line IV - IV of FIG. 3;
FIG. 5 is an enlarged fragmentary cross-sectional view of the housing supporting the imaging device and disposed in a housing chamber in the model gun;
FIG. 6 is a plan view of a shock absorbing disk on an open end of the housing; and
FIG. 7 is a plan view of a shock absorbing disk on a bottom end of the housing.

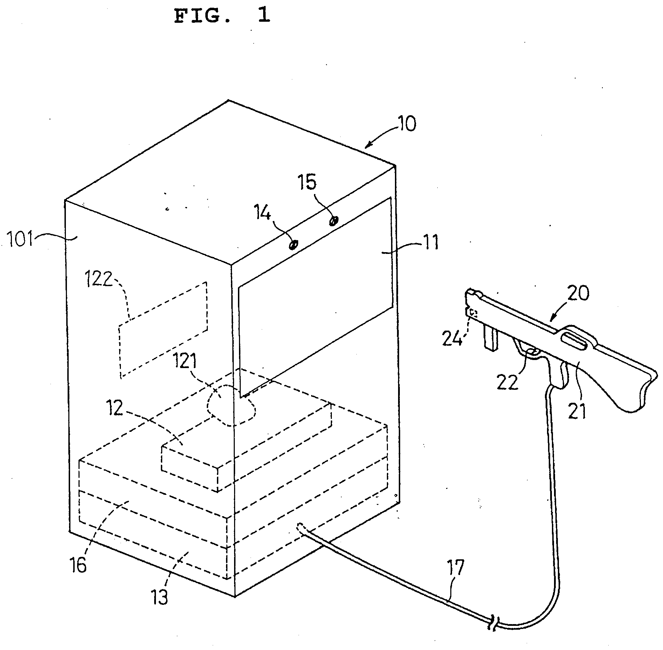

As shown in FIG. 1, a shooting game machine generally comprises a game machine unit 10 and a model gun 20 electrically connected to the game machine unit 10.

The game machine unit 10 comprises a monitor display screen 11 mounted on a front panel of a housing 101, a video projector 12 disposed in the housing 101 and having an optical projection unit 121 for projecting a target onto the monitor display screen 11, and a controller 13 disposed in the housing 101 for executing a shooting game according to a shooting game program based on the data of shots of the model gun 20 and sending an image signal to the video projector 12. The game machine unit 10 also has a pair of light sources 14, 15, each comprising an infrared light-emitting diodes (LED), mounted on the front panel of the housing 101 above the monitor display screen 11 for emitting spots of infrared radiation having a wavelength outside of the visible wavelength range, and a position detector 16 positioned on the controller 13 in the housing 101 for detecting a position on the monitor display screen 11 which is hit by the model gun 20. The controller 13 and the position detector 16 are connected to the model gun 20 by a cable 17.

The optical projection unit 121 projects a shooting game image onto a mirror 122 positioned in the housing 101 behind the video projector 12. The shooting game image is reflected by the mirror toward the monitor display screen 11, which then displays the shooting game image so as to be visible by the player of the shooting game machine. The light sources 14, 15 are energized by an LED driver circuit (not shown) to emit respective spots of infrared radiation above the monitor display screen 11. The light sources 14, 15 may be positioned in an upper peripheral edge of the monitor display screen 11 insofar as the light sources 14, 15 will not interfere with the displayed shooting game image.

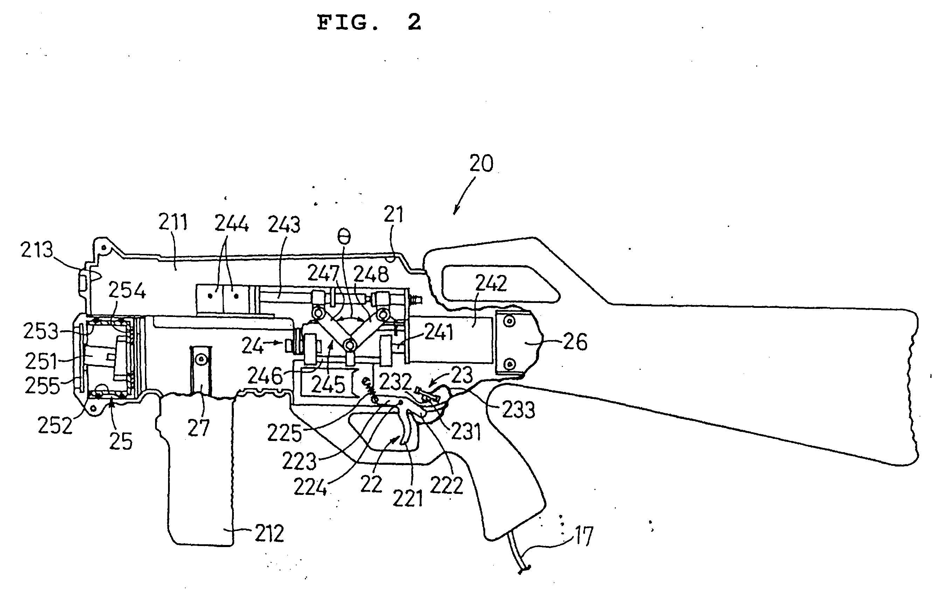

FIG. 2 shows an internal structure of the model gun 20, partly broken away, in side elevation. As shown in FIG. 2, the model gun 20 comprises a gun casing 21, a trigger 22 disposed in a lower central portion of the gun casing 21, a switch 23 disposed in the gun casing 21 for detecting whether the trigger 22 is pulled or not, an impact generator 24 disposed in the gun casing 21 above the trigger 22 for generating and imparting an impact to the gun casing 21 when the trigger 22 is pulled, and an imaging unit 25 disposed in a front muzzle end of the gun casing 21 for imaging spots of infrared radiation emitted by the light sources 14, 15. When the player pulls the trigger 22 while pointing the model gun 20 at the monitor display screen 11, the switch 23 sends a trigger signal through the cable 17 to the controller 13 so as to enable the controller 13 to recognize a hypothetical shot made by the model gun 20. At the same time, the imaging unit 25 detects spots of infrared radiation emitted by the light sources 14, 15 and sends a signal representative of the detected spots through the cable 17 to the position controller 16, which then determines the position on the monitor display screen 11 which is pointed at, i.e., hit, by the model gun 20. The controller 13 determines whether a target displayed on the monitor display screen 11 is hit by the model gun 20 based on the determined hit position and the position of the target.

The trigger 22 comprises a finger lever 221 projecting downwardly from the gun casing 21 for being engaged by a player's finger, and an action lever 223 joined to the finger lever 221 and disposed in the gun casing 21, the action lever 223 having a rear slanted pin 222. The action lever 223 is pivotally supported at its intermediate portion in the gun casing 21. The trigger 22 is normally urged toward a front position as shown in FIG. 2 by a helical spring 225 that is connected between the gun casing 21 and a front end of the action lever 223.

The switch 23 comprises a switch casing 231 housing a switch mechanism (not shown) therein, a pushbutton 232 mounted on the switch casing 231 and connected to the switch mechanism, and a lead 233 connected to the switch mechanism for delivering a switch signal from the switch mechanism. The lead 233 is electrically connected to the cable 17. When the trigger 22 is pulled, the rear slanted pin 222 of the action lever 223 pushes the pushbutton 232 against the bias of the helical spring 225, turning on the switch mechanism which sends a switch signal through the lead 233 to the cable 17.

The impact generator 24 comprises a motor 242 having a rotatable drive shaft 241 extending forward toward the front muzzle end, i.e., to the left in FIG. 2, a shaft 243 extending in and along a barrel 211 of the gun casing 21 and reciprocally movable in its axial direction, a pair of weights 244 attached to a front end (left end in FIG. 2) of the shaft 243 for reciprocating movement in unison with the shaft 243, and a conversion mechanism 245 for converting rotation of the rotatable drive shaft 241 of the motor 242 into axial reciprocating movement of the shaft 243. The conversion mechanism 245 comprises a revolving shaft 246 rotatable around the axis of the rotatable drive shaft 241 when the motor 242 is energized, and a pair of front and rear joint bars 247, 248 that are angularly movable in directions to increase and reduce an angle θ formed therebetween in response of rotation of the revolving shaft 246. Specifically, the revolving shaft 246 extends parallel to and is eccentrically connected to the rotatable drive shaft 241, and the front and rear joint bars 247, 248 have lower ends pivotally connected in common to an intermediate portion of the revolving shaft 246. The rear joint bar 248 has its upper end pivotally connected to a member fixed to the gun casing 21, and the front joint bar 247 has its upper end pivotally connected to the shaft 243.

When the motor 242 is energized, the revolving shaft 246 eccentrically connected to the rotatable drive shaft 241 rotates around the axis of the rotatable drive shaft 241, causing the front and rear joint bars 247, 248 to move angularly to increase and reduce the angle θ. Therefore, the shaft 243 and the weights 244 are reciprocally moved in and along the barrel 211 a plurality of times per second, e.g., from several times to twenty times per second. While thus moving, the weights 244 thus store a large amount of kinetic energy, and the stored kinetic energy is transmitted to the gun casing 21. As a result, impacts are successively imparted to the gun casing 21 along the barrel 211, simulating actual recoiling actions of a real machine gun when it fires a succession of shots.

The imaging unit 25 has an imaging device 251 which comprises a CCD area sensor that is sufficiently sensitive to infrared radiation. The imaging device 251 is disposed in a cylindrical housing 252 positioned in the gun casing 21 beneath a muzzle 213 of the barrel 211 and having an opening 253 that is open to the left in FIG. 2, i.e., in the same direction as the direction in which the muzzle 213 faces. The imaging device 251 has a photodetector surface on its front end which faces forward to the left in FIG. 2 through the opening 253. The imaging device 251 also has a filter 255 positioned in front of the opening 253 and hence the photodetector surface of the imaging device 251. The filter 255 serves to pass only the spots of infrared radiation emitted from the light sources 14, 15. The imaging device 251 further includes a focusing lens (not shown) for focusing the spots of infrared radiation onto the photodetector surface of the imaging device 251. The imaging device 251 is not required to be able to an entire shooting game image displayed on the monitor display screen 11 because the position on the monitor display screen 11 which is hit by the model gun 20 can be determined on the basis of a detected signal representative of the spots of infrared radiation emitted from the light sources 14, 15.

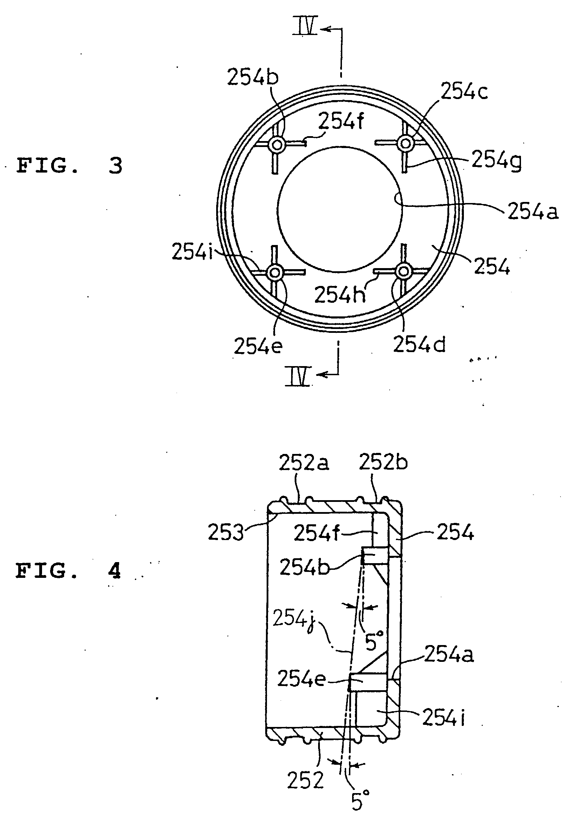

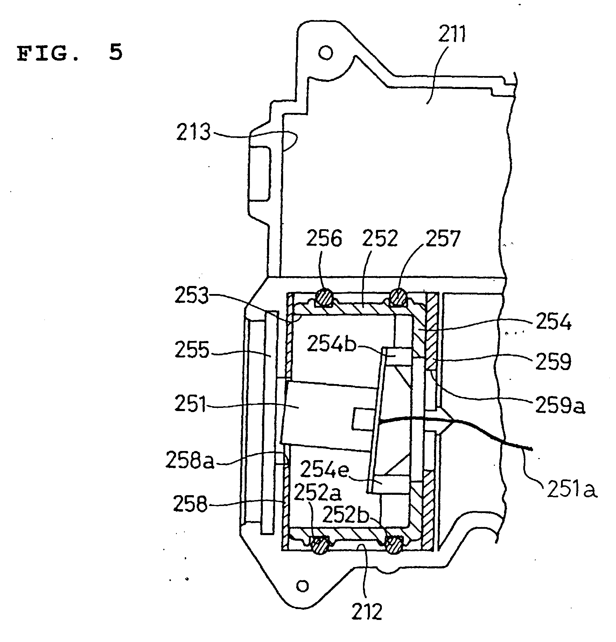

As shown in FIGS. 3 and 4, the housing 252 has a through hole 254a defined in a bottom wall 254 thereof opposite to the opening 253, i.e., more remote from the muzzle 213 than the opening 253. The through hole 254a allows radiating heat generated by the imaging device 251 to pass therethrough into the gun casing 21. A lead 251a (see FIG. 5) from the imaging device 251 extends through the through hole 254a and is connected to the cable 17. The bottom wall 254 has four bosses 254b, 254c, 254d, 254e, i.e., upper bosses 254b, 254c and lower bosses 254d, 254e, mounted on an inner surface thereof at angularly equally spaced positions around the through hole 254a. The imaging device 251 is supported on and fastened to the bosses 254b, 254c, 254d, 254e by screws.

The upper bosses 254b, 254c are shorter than the lower bosses 254d, 254e. The bosses 254b, 254c, 254d, 254e have respective slanted distal end surfaces lying in a common plane 254j that is slanted about 5° with respect to the bottom wall 254. As a result, the imaging device 251 is inclined about 5° with respect to the vertical plane of the muzzle 213.

The gradient or angle of the common plane 254j with respect to the bottom wall 254 is set to an appropriate value depending on the size of the monitor display screen 11, the distance between the monitor display screen 11 and the model gun 20, etc. The bosses 254b, 254c, 254d, 254e are reinforced by respective criss-cross stiffener walls 254f, 254g, 254h, 254i integral therewith and also with the housing 252. The housing 252 has two axially spaced annular grooves 252a, 252b defined on its outer circumferential wall surface for receiving respective shock absorbing rings 256, 257 (described later on) therein.

As shown in FIG. 5, the imaging device 251 is fastened to the bosses 254b, 254c, 254d, 254e, and the housing 25 is disposed in a housing chamber 212 that is defined in the gun casing 21 below the front end of the barrel 211 near the muzzle 213 and extends along the barrel 211, with the shorter bosses 254b, 254c in an upper position and the longer bosses 254d, 254e in a lower position. With the housing 25 thus positioned in the housing chamber 212, when the model gun 20 is pointed at the monitor display screen 11 such that the barrel 211 lies perpendicularly to the monitor display screen 11, the photodetector surface of the imaging device 251 is inclined upwardly at about 5° with respect to the monitor display screen 11. When the muzzle 213 of the model gun 20 is pointed at a substantially central area of the monitor display screen 11, images of the spots of infrared radiation from the light sources are focused on a substantially central area of the photodetector surface of the imaging device 251. As a consequence, even when the muzzle 213 of the model gun 20 is pointed at a lower portion of the monitor display screen 11, the photodetector surface of the imaging device 251 can capture spots of infrared radiation emitted by the light sources 14, 15 positioned above the monitor display screen 11, so that the imaging device 251 can reliably image the spots of infrared radiation. The imaging device 251 can capture images of the spots of infrared radiation no matter where the muzzle 213 may be aimed at on the monitor display screen 11.

Shock absorbing rings 256, 257, each of which are made of a gel comprising a special polymer with a liquid entrapped in its three-dimensional mesh structure of intertwining filaments, are disposed respectively in the annular grooves 252a, 252b. A shock absorbing disk 258 having a circular central through hole 258a defined therein is disposed in the housing chamber 212 adjacent to the opening 253 of the housing 252. The shock absorbing disk 258 is made of soft neoprene sponge. Another shock absorbing disk 259 having a rectangular central through hole 259a defined therein is disposed in the housing chamber 212 adjacent to the bottom wall 254 of the housing 252. The shock absorbing disk 259 is made of either silicone-base rubber sponge or high-density microcellular urethane foam. The shock absorbing rings 256, 257 and the shock absorbing disks 258, 259 are held in intimate contact with inner surfaces of the housing chamber 212. As a result, impacts imparted to the model gun 20 by the impact generator 24 and shocks applied to the model gun 20 are absorbed and reduced by the shock absorbing rings 256, 257 and the shock absorbing disks 258, 259, so that no large impacts and shocks will be applied to the imaging device 251 mounted in the housing 252.

The shock absorbing disk 259 adjacent to the bottom wall 254 is thicker than the shock absorbing disk 258 adjacent to the opening 253. When the player inadvertently drops the model gun 20 onto the floor, the model gun 20 usually falls with the muzzle 213 up because of the position of the center of gravity of the model gun 20. Therefore, the thicker shock absorbing disk 259 is highly effective to lessen shocks applied to the imaging device 251 when the model gun 20 drops onto the floor.

The shock absorbing rings 256, 257 serve to absorb impacts or shocks applied to the imaging device 251 in directions transverse to the barrel 211 and also shocks applied to the imaging device 251 in directions parallel to the barrel 211. Therefore, the shock absorbing rings 256, 257 are made of the gel, described above, which has a better ability to dampen shocks than the shock absorbing disks 258, 259, though the gel is more expensive. The shock absorbing disks 258, 259 may also be made of the same gel as the shock absorbing rings 256, 257.

Each of the shock absorbing rings 256, 257 and the shock absorbing disks 258, 259 may be made of soft neoprene sponge, silicone-base rubber sponge, or high-density microcell urethane foam. Alternatively, the shock absorbing rings 256, 257 and the shock absorbing disks 258, 259 may be made of a general elastometric material such as silicone rubber or the like.

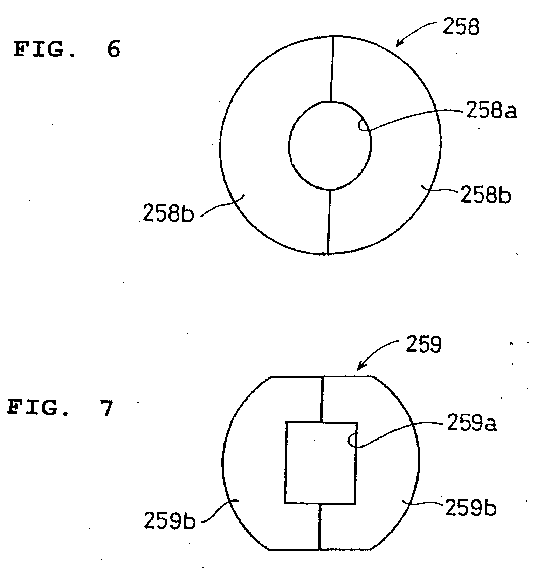

As shown in FIG. 6, the shock absorbing disk 258 positioned adjacent to the opening 253 of the housing 252 comprises a pair of semicircular shock absorbing plates 258b combined with each other. The semicircular shock absorbing plates 258b have respective semicircular openings that jointly make up the central through hole 258a when the semicircular shock absorbing plates 258b are combined with each other. As shown in FIG. 7, the shock absorbing disk 259 positioned adjacent to the bottom wall 254 of the housing 252 comprises a pair of truncated semicircular shock absorbing plates 259b combined with each other. The truncated semicircular shock absorbing plates 259b have respective rectangular openings that jointly make up the central through hole 259a when the truncated semicircular shock absorbing plates 259b are combined with each other. The shock absorbing plates 258b, 259b firmly adhere to the inner surfaces of the housing chamber 212 with double-sided adhesive tapes (not shown) that are applied to respective surfaces of the shock absorbing plates 258b, 259b.

As illustrated in FIG. 2, a metal plate 26 is fastened by screws to the gun casing 21 behind the trigger 221, thereby reinforcing the gun casing 21. Another metal plate 27 is fastened by screws to a grip 212 extending downwardly from the gun casing 21 remotely from the barrel 211, thereby reinforcing the grip 212.

Operation of the shooting game machine with the model gun 20 will be described below. When the player of the shooting game machine presses a start switch (not shown) after having inserted a coin, the controller 13 starts executing a shooting game and displays a shooting game image including a target on the monitor display screen 11. The player points the model gun 20 at the monitor display screen 11 and aims at the target. When the player pulls the trigger 22, the switch 23 is turned on, sending a signal through the cable 17 to the controller 13. While the player is pulling the trigger 22, the controller 13 sends a motor drive signal through the cable 17, energizing the motor 242 to actuate the impact generator 24 which generates impacts applied to the gun casing 21.

While the player is pulling the trigger 22, the signal from the switch 23 is also transmitted to the position detector 16, which detects a hit position on the monitor display screen 11 based on spots of infrared radiation from the light sources 14, 15 which are imaged by the imaging device 251. The position detector 16 sends successive hit position data to the controller 13, which then determines whether the target is hit by each of successive shots fired by the model gun 20, based on the hit position data from the position detector 16 and positional data of the displayed target. The controller 13 can make such a decision successively at intervals synchronism with the refreshing of shooting game images because it is not necessary for the controller 13 to switch from frames of game image to a frame of raster image (white image), unlike the conventional shooting game machine.

When the player releases the trigger 22, the switch 23 is turned off, and the controller 13 stops sending the motor drive signal. Therefore, the motor 242 is deenergized, and the impact generator 24 stops imparting impacts to the gun casing 21. The controller 13 also stops making decisions as to whether the target is hit by a shot or not.

In the illustrated embodiment, the imaging device 251 has its photodetector surface inclined upwardly with respect to the monitor display screen 11. However, if the light sources 14, 15 are disposed beneath the monitor display screen 11, the imaging device 251 may be installed such that its photodetector surface is inclined downwardly with respect to the monitor display screen 11. If the monitor display screen 11 is of a relatively small size, then the light sources 14, 15 may be positioned respectively at the left and right ends of a central region of the monitor display screen 11. In this case, the imaging device 251 may be installed such that its photodetector surface is directed straight toward the monitor display screen 11. The light sources 14, 15 may be dispensed with, and spots of radiation image may be projected from an infrared radiation emitting device disposed in the housing 101 onto the positions of the light sources 14, 15.

In the illustrated embodiment, the imaging device 251 is directly mounted on the bosses 254b, 254c, 254d, 254e of the housing 252. However, the imaging device 251 may be mounted on the bosses 254b, 254c, 254d, 254e through respective shock absorbing members made of rubber or the like interposed therebetween for further reducing impacts and shocks applied to the imaging device 251.

In the illustrated embodiment, the housing chamber 212 is defined in the gun casing 21 below the front end of the barrel 211 near the muzzle 213 and extends along the barrel 211. However, the housing chamber 212 may be defined in the barrel 211 and extend along the barrel 211.

Although a certain preferred embodiment of the present invention has been shown and described in detail, it should be understood that various changes and modifications may be made therein without departing from the scope of the appended claims.

## Claims

1. A model gun for use with a shooting game machine having a monitor display screen, comprising:
a gun casing including a barrel having a muzzle on an end thereof;
an area sensor disposed in said gun casing for imaging a predetermined area in a direction in which the muzzle is pointed at the monitor display screen to detect a shot position on the monitor display screen;
a housing chamber defined in said gun casing and extending along said barrel;
a housing disposed in said housing chamber, said area sensor being disposed in said housing; and
a plurality of shock absorbing members interposed between said housing and said housing chamber.

2. A model gun according to claim 1, wherein said housing has an opening which is open in said direction, a bottom wall opposite to said opening, and a circumferential wall extending between said opening and said bottom wall, said shock absorbing members being disposed adjacent respectively to said circumferential wall, said opening, and said bottom wall.

3. A model gun according to claim 2, wherein the shock absorbing member disposed adjacent to said circumferential wall comprises a shock absorbing ring disposed around said circumferential wall, and the shock absorbing members disposed adjacent to said opening and said bottom wall comprise shock absorbing plates, respectively.

4. A model gun according to claim 1, 2, or 3, further comprising a light source disposed adjacent to the monitor display screen for emitting a spot of radiation to be imaged by said area sensor to detect said shot position on the monitor display screen, wherein said area sensor has a photodetector surface inclined with respect to a plane of said muzzle for imaging the spot of radiation from said light source in a substantially central area of said photodetector surface when said muzzle is pointed at a substantially central area of said monitor screen.

5. A model gun according to claim 1, wherein at least one of said shock absorbing members is made of a gel.

6. A model gun according to claim 3, wherein said shock absorbing ring disposed around said circumferential wall is made of a gel.

7. A model gun according to claim 3, wherein said shock absorbing plate disposed adjacent to said bottom wall is thicker than said shock absorbing plate disposed adjacent to said opening.

8. A model gun according to claim 4, wherein said photodetector surface is inclined about 5° with respect to the plane of said muzzle.

9. A model gun according to claim 1, wherein said area sensor has a photodetector surface for detecting a spot of radiation emitted with respect to the monitor display screen, said housing having a plurality of bosses by which said area sensor is supported in said housing, said bosses having different lengths to incline said photodetector surface inclined with respect to a vertical plane of said muzzle.

10. A model gun for use with a shooting game machine having a monitor display screen, comprising:
a gun casing having a muzzle on an end thereof and a housing chamber defined therein;
a housing disposed in said housing chamber;
an area sensor disposed in said housing for imaging a spot of radiation emitted with respect to the monitor display screen to detect a position on the monitor display screen which is pointed at by said muzzle; and
a plurality of elastomeric shock absorbing members interposed between said housing and said housing chamber.

11. A model gun according to claim 10, wherein said area sensor has a photodetector surface for detecting said spot of radiation, said housing having a plurality of bosses by which said area sensor is supported in said housing, said bosses having different lengths to incline said photodetector surface inclined with respect to a vertical plane of said muzzle.

12. A model gun according to claim 1 or 10, wherein said housing is of a cylindrical shape having a pair of opposite ends and a circumferential wall extending therebetween, said shock absorbing members being disposed respectively at said opposite ends and around said circumferential wall.

13. A model gun according to claim 1 or 10, wherein said housing is of a cylindrical shape having a pair of opposite ends and a circumferential wall extending therebetween, said shock absorbing members including at least one shock absorbing ring disposed around said circumferential wall, and shock absorbing disks disposed adjacent to said opposite ends, respectively.

14. A model gun according to claim 13, wherein said shock absorbing ring is made of a gel, said shock absorbing disk disposed adjacent to one of said opposite ends is made of soft neoprene sponge, and said shock absorbing disk disposed adjacent to the other of said opposite ends is made of either silicone-base rubber sponge or high-density microcell urethane foam.

15. A model gun according to claim 14, wherein said other of the opposite ends is positioned more remotely from said muzzle than said one of the opposite ends, and said shock absorbing disk disposed adjacent to said other of said opposite ends is thicker than said shock absorbing disk disposed adjacent to said one of said opposite ends.

16. A model gun according to claim 13, wherein said circumferential wall has an annular groove defined thereon, said shock absorbing ring being disposed in said annular groove.
